# EUROPEAN PATENT APPLICATION

(11) **EP 4 797 341 A1**
(43) Date of publication of application: **26.08.2026**
(21) Application number: 24921710.0
(22) Date of filing: 06.12.2024
(51) Int. Cl.: H01M 4/133, H01M 4/66, H01M 10/054

(54) **ELECTRODE ASSEMBLY, BATTERY CELL, SECONDARY BATTERY, AND ELECTRIC DEVICE**

(30) Priority: 31.01.2024 CN 202410137192
(71) Applicant: Contemporary Amperex Technology Co., Limited, Ningde, Fujian 352100 (CN)
(72) Inventor: SHAO, Zirui, Ningde, Fujian 352100 (CN); GUAN, Wenhao, Ningde, Fujian 352100 (CN); MA, Li, Ningde, Fujian 352100 (CN); ZHONG, Wei, Ningde, Fujian 352100 (CN); GE, Xiaoming, Ningde, Fujian 352100 (CN)
(74) Representative: Ziebig Hengelhaupt Intellectual Property Attorneys Patentanwaltskanzlei PartGmbB
(86) International application number: PCT/CN2024/137402
(87) International publication number: WO 2025/161688

(57) **Abstract**

The present application provides an electrode assembly, a battery cell, a secondary battery, and an electric apparatus. The electrode assembly includes a positive electrode plate, a negative electrode current collector, and a separator located between the positive electrode plate and the negative electrode current collector. The electrode assembly further includes a modification layer located between the negative electrode current collector and the separator, the modification layer including a substrate material and an active material dispersed in the substrate material; where the substrate material has a lithium metal nucleation overpotential greater than or equal to 80 mV, and the active material has a lithium metal nucleation overpotential less than that of the substrate material. The modification layer in the electrode assembly of the present application can reduce volume expansion during deposition of metals such as lithium and sodium on the negative electrode current collector, thereby reducing the risk of piercing the separator due to volume expansion and thus improving the reliability and cycling performance of the battery.

## Description

### CROSS-REFERENCE TO RELATED APPLICATIONS

The present application claims priority to Chinese Patent Application No. 202410137192.4, filed on January 31, 2024, and entitled "ELECTRODE ASSEMBLY, BATTERY CELL, SECONDARY BATTERY, AND ELECTRIC APPARATUS," which is incorporated herein by reference in its entirety.

### TECHNICAL FIELD

The present application relates to the field of battery technologies, and specifically to an electrode assembly, a battery cell, a secondary battery, and an electric apparatus.

### BACKGROUND

Compared to ionic battery cells, metallic battery cells may have higher energy density. However, unlike the negative electrode of an ionic battery cell, the surface of the negative electrode current collector commonly used in a metallic battery typically exhibits a localized nucleation mode. Localized nuclei tend to grow into loose and porous structures, leading to rapid volume expansion of the negative electrode current collector, intense side reactions, which may even cause dendrites to pierce through the separator and adversely affect the cycle stability of the battery cell.

### SUMMARY

Embodiments of the present application provide an electrode assembly, a battery cell, a secondary battery, and an electric apparatus, which enables the battery cell to have good cycle stability.

In a first aspect, embodiments of the present application provide an electrode assembly, where the electrode assembly includes a positive electrode plate, a negative electrode current collector, and a separator located between the positive electrode plate and the negative electrode current collector; and the electrode assembly further includes a modification layer located between the negative electrode current collector and the separator, the modification layer including a substrate material and an active material dispersed in the substrate material; where the substrate material has a lithium metal nucleation overpotential greater than or equal to 80 mV, and the active material has a lithium metal nucleation overpotential less than that of the substrate material.

In the embodiments of the present application, a modification layer is disposed between the negative electrode current collector and the separator. The active material in the modification layer has high affinity with metals such as lithium and sodium, which can increase the number of active sites on the surface of the negative electrode current collector, reduce the nucleation overpotential of the negative electrode current collector, enabling uniform deposition of metals on the surface of the negative electrode current collector and suppressing localized deposition of metals such as lithium and sodium on the surface of the negative electrode current collector. The substrate material in the modification layer scarcely reacts with metals such as lithium and sodium and therefore undergoes no volume change before and after metal deposition, and serves to limit volume change of the negative electrode current collector in the modification layer, which can reduce volume expansion during deposition of metals such as lithium and sodium, thereby reducing the risk of piercing the separator due to volume expansion and thus improving the reliability and cycling performance of the battery. In addition, the active material in the modification layer can react with metals such as lithium and sodium to form alloys, and these alloys can increase the negative electrode potential of the battery, which is beneficial to improve the quality of the solid electrolyte interphase (SEI) film on the surface of the negative electrode, thereby improving the cycle stability of the battery cell.

In some embodiments, the substrate material has a lithium metal nucleation overpotential of 100 mV to 500 mV.

In some embodiments, the active material has a lithium metal nucleation overpotential of 10 mV to 50 mV.

In some embodiments, the substrate material includes one or more of a non-graphitized carbon material or a non-lithophilic metal.

In some embodiments, the non-graphitized carbon material includes hard carbon, amorphous carbon, or a combination thereof.

In some embodiments, the non-lithophilic metal includes one or more of Sc, Ti, V, Cr, Mn, Fe, Co, Ni, Cu, Y, Zr, Nb, Mo, Ru, Ta, W, Pt, or Ir.

In some embodiments, the active material includes one or more of graphitized carbon, lithophilic metals, or a compound thereof.

In some embodiments, the graphitized carbon includes one or more of graphite, graphene, or graphdiyne.

In some embodiments, the lithophilic metal includes one or more of Sn, Mg, Zn, Bi, Pb, Au, Ag, Al, Si, In, or Ga. The compound of the lithophilic metal includes one or more of an oxide, a sulfide, a fluoride, a chloride, a nitride, and a carbide.

In some embodiments, based on the total weight of the modification layer, the active material has a weight content of 40% to 95%, and the substrate material has a weight content of 5% to 60%.

In some embodiments, based on the total weight of the modification layer, the active material has a weight content of 55% to 70%, and the substrate material has a weight content of 30% to 45%.

In some embodiments, the active material has an areal density greater than or equal to 0.5 g/m².

In some embodiments, the modification layer has a thickness of 10 nm to 1000 nm.

In some embodiments, the modification layer has a thickness of 100 nm to 500 nm.

In some embodiments, the material of the negative electrode current collector includes one or more of copper, nickel, titanium, magnesium, aluminum, copper alloy, nickel alloy, titanium alloy, magnesium alloy, or aluminum alloy.

In a second aspect, embodiments of the present application provide a battery cell including the electrode assembly according to the first aspect of the present application.

In some embodiments, the battery cell includes at least one of a negative electrode-free lithium metal battery cell and a negative electrode-free sodium metal battery cell.

In a third aspect, embodiments of the present application provide a secondary battery including the battery cell according to the second aspect of the present application.

In a fourth aspect, embodiments of the present application provide an electric apparatus including the secondary battery according to the third aspect of the present application.

### BRIEF DESCRIPTION OF DRAWINGS

In order to more clearly illustrate the technical solutions of the embodiments of the present application, the drawings required for use in the embodiments of the present application are briefly introduced below. Those of ordinary skill in the art can obtain other drawings based on these drawings without creative effort.
FIG. 1 is a schematic diagram of a battery cell according to some embodiments of the present application.
FIG. 2 is an exploded schematic diagram of a battery cell according to some embodiments of the present application.
FIG. 3 is a schematic diagram of a battery module according to some embodiments of the present application.
FIG. 4 is a schematic diagram of a battery pack according to some embodiments of the present application.
FIG. 5 is an exploded schematic diagram of the battery pack shown in FIG. 4.
FIG. 6 is a schematic structural diagram of an electrode assembly of a battery cell according to some embodiments of the present application.
FIG. 7 is a schematic diagram of an electric apparatus according to some embodiments of the present application.

In the drawings, the drawings are not necessarily drawn to actual scale.

Description of reference numerals: 1. battery pack; 2. upper enclosure; 3. lower enclosure; 4. battery module; 5. battery cell; 51. casing; 52. electrode assembly; 53. cover plate; 10. positive electrode plate; 20. negative electrode current collector; 30. separator; and 40 modification layer.

### DESCRIPTION OF EMBODIMENTS

Hereinafter, embodiments specifically disclosing the electrode assembly, battery cell, battery, and electric apparatus of the present application will be described in detail with appropriate reference to the drawings. However, unnecessary detailed descriptions may be omitted in some cases. For example, detailed descriptions of well-known matters or repeated descriptions of substantially identical structures may be omitted. This is to avoid unnecessarily lengthy descriptions and to facilitate understanding by those skilled in the art. Additionally, the drawings and the following description are provided to enable those skilled in the art to fully understand the present application and are not intended to limit the subject matter recited in the claims.

The "ranges" disclosed in the present application are defined in the form of lower and upper limits, where a given range is defined by selecting a lower limit and an upper limit, and the selected lower and upper limits define the boundaries of a particular range. Ranges defined in this manner may include or exclude endpoints and can be arbitrarily combined, meaning any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In the present application, unless otherwise stated, the numerical range "a-b" represents a shorthand notation for any combination of real numbers between a and b, where both a and b are real numbers. For example, the numerical range "0-5" means that all real numbers between "0-5" have been listed herein, and "0-5" is merely a shorthand notation for these numerical combinations. Additionally, when a parameter is expressed as an integer greater than or equal to 2, it is equivalent to disclosing that the parameter is, for example, an integer of 2, 3, 4, 5, 6, 7, 8, 9, 10, 11, 12, and so on.

Unless otherwise specified, all embodiments and optional embodiments of the present application can be combined with each other to form new technical solutions, and such technical solutions should be considered included in the disclosure of the present application.

Unless otherwise specified, all technical features and optional technical features of the present application can be combined with each other to form new technical solutions, and such technical solutions should be considered included in the disclosure of the present application.

Unless otherwise specified, all steps in the present application can be performed sequentially or randomly, preferably sequentially. For example, a method including steps (a) and (b) indicates that the method may include steps (a) and (b) performed sequentially, or steps (b) and (a) performed sequentially. For example, if it is mentioned that the method may further include step (c), it means that step (c) can be added to the method in any order, for example, the method may include steps (a), (b), and (c), or steps (a), (c), and (b), or steps (c), (a), and (b).

In the description of the embodiments of the present application, unless otherwise specified, terms such as "connected" or "connection" should be understood in a broad sense, for example, it can be a fixed connection, a detachable connection, or an integral connection; it can be directly connected or indirectly connected through an intermediate medium, or it can be the internal communication of two elements. For those of ordinary skill in the art, the specific meanings of the above terms in the present application can be understood according to specific situations.

In the present application, "multiple" refers to two or more, including two. "Various" in the present application refers to two or more, including two.

The battery mentioned in the embodiments of the present application may be a single physical module including one or more battery cells to provide higher voltage and capacity. For example, the battery mentioned in the present application may include a battery cell, a battery module, or a battery pack, or the like.

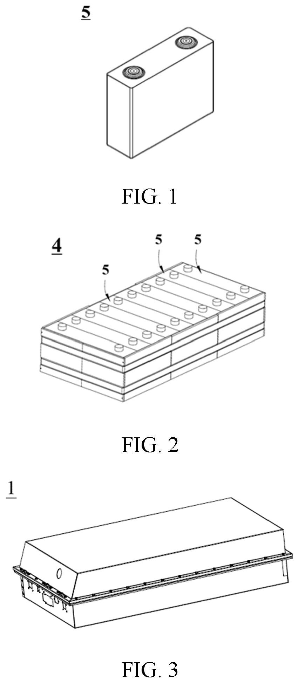

A battery cell is the smallest unit constituting a battery, capable of independently performing charge and discharge functions. The battery cell may be cylindrical, prismatic, or other shapes, which are not limited by the embodiments of the present application. FIG. 1 shows a battery cell 5 with a prismatic structure as an example.

When there are multiple battery cells, the multiple battery cells are connected in series, parallel, or a combination thereof through a busbar component. In some embodiments, the battery may be a battery module; when there are multiple battery cells, the multiple battery cells are arranged and fixed to form a battery module. In some embodiments, the battery may be a battery pack, and the battery pack includes an enclosure and battery cells, with the battery cells or battery modules accommodated in the enclosure. In some embodiments, the enclosure may form part of the chassis structure of a vehicle. For example, a part of the enclosure may form at least a portion of the chassis of the vehicle, or a part of the enclosure may form at least a portion of the crossbeams and longitudinal beams of the vehicle.

In some embodiments, battery cells may be assembled into a battery module, and the number of battery cells in the battery module may be multiple, with the specific number adjustable based on the application and capacity of the battery module. FIG. 2 is a schematic diagram of a battery module 4 as an example. As shown in FIG. 2, in the battery module 4, multiple battery cells 5 may be arranged sequentially along the length direction of the battery module 4. Alternatively, they may be arranged in any other manner. The multiple battery cells 5 may further be fixed by fasteners.

Optionally, the battery module 4 may further include a housing with an accommodating space, in which the multiple battery cells 5 are accommodated.

In some embodiments, the above battery module may be further assembled into a battery pack, and the number of battery modules in the battery pack may be adjusted based on the application and capacity of the battery pack.

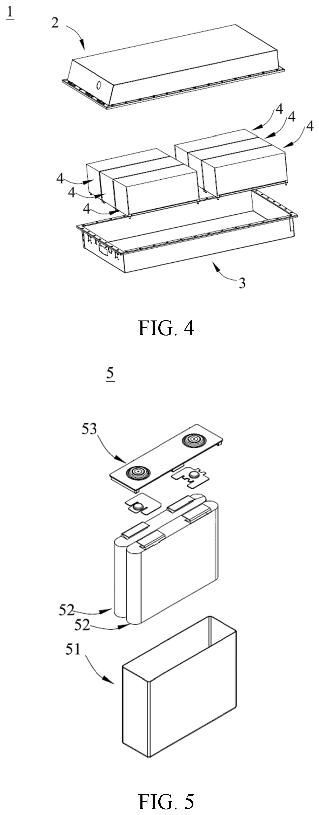

FIG. 3 and FIG. 4 are schematic diagrams of a battery pack 1 as an example. As shown in FIG. 3 and FIG. 4, the battery pack 1 may include an enclosure and multiple battery modules 4 disposed within the enclosure. The enclosure includes an upper enclosure 2 and a lower enclosure 3, where the upper enclosure 2 is used to cover the lower enclosure 3, forming a closed space for accommodating the battery modules 4. The multiple battery modules 4 can be arranged in any manner within the enclosure.

In some embodiments, the battery may be an energy storage apparatus. The energy storage apparatus includes an energy storage container, an energy storage cabinet, and the like.

The battery cells provided in the embodiments of the present application are negative electrode-free battery cells, for example, including at least one of a negative electrode-free lithium metal battery cell and a negative electrode-free sodium metal battery cell.

A negative electrode-free battery cell generally refers to a battery cell constructed without actively providing a negative electrode active material layer on the negative electrode side during the manufacturing process of the battery cell, for example, without forming a negative electrode active material layer by coating or depositing a layer or a carbonaceous active material layer at the negative electrode during the manufacturing process of the battery cell. During the first charge, ions gain electrons at the negative electrode side and deposit on the surface of the negative electrode current collector to form a metal, and during discharge, the metal can transform back into ions and return to the positive electrode, achieving cyclic charge and discharge. Compared to other battery cells, negative electrode-free battery cells can achieve higher energy density due to the absence of a negative electrode active material layer. In some embodiments, to improve battery cell performance, some substances conventionally used as negative electrode active materials, such as carbon materials, may be provided on the negative electrode side of negative electrode-free battery cells. Although these substances have some capacity, their content is low and they are not used as the primary negative electrode active material in the battery cell, so such battery cells can still be considered negative electrode-free battery cells. The CB (Cell Balance) value of negative electrode-free battery cells is typically very small. For example, in some embodiments, the CB value of a negative electrode-free battery cell may be less than or equal to 0.1. The CB value is the ratio of the capacity per unit area of the negative electrode to the capacity per unit area of the positive electrode in the battery cell. Since negative electrode-free battery cells contain no or only a small amount of negative electrode active material, the capacity per unit area of the negative electrode is small, resulting in a low CB value, typically less than or equal to 0.1.

The battery cell includes an electrode assembly. The electrode assembly may have a wound structure or a stacked structure, which is not limited by the embodiments of the present application.

The battery cell may further include an outer package, which can be used for encapsulating the electrode assembly. The outer package may be a hard shell, such as a hard plastic shell, aluminum shell, or steel shell. The outer package may alternatively be a soft pouch, such as a pouch-type soft package. The material of the soft pouch may be plastic, such as one or more of polypropylene (PP), polybutylene terephthalate (PBT), or polybutylene succinate (PBS).

In some embodiments, as shown in FIG. 5, the outer package may include a casing 51 and a cover plate 53. The casing 51 may include a bottom plate and side plates connected to the bottom plate, with the bottom plate and side plates enclosing a receiving cavity. The casing 51 has an opening communicating with the receiving cavity, and the cover plate 53 is used to cover the opening to seal the receiving cavity. The electrode assembly 52 is encapsulated in the receiving cavity. There may be one or more electrode assemblies 52 in the battery cell 5, and the quantity may be adjusted as required.

### [Electrode assembly]

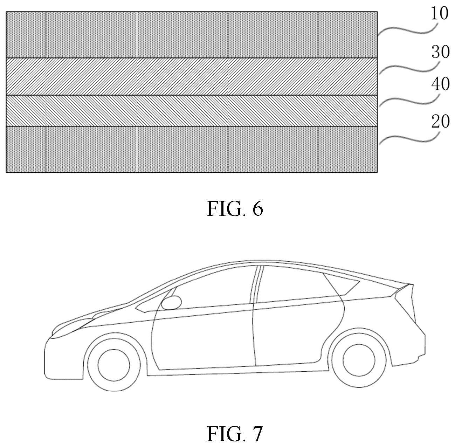

Embodiments in the first aspect of the present application provide an electrode assembly. As shown in FIG. 6, the electrode assembly 52 includes a positive electrode plate 10, a negative electrode current collector 20, and a separator 30 located between the positive electrode plate 10 and the negative electrode current collector 20; the electrode assembly 52 further includes a modification layer 40 located between the negative electrode current collector 20 and the separator 30, the modification layer 40 including a substrate material and an active material dispersed in the substrate material; where the substrate material has a lithium metal nucleation overpotential greater than or equal to 80 mV, and the active material has a lithium metal nucleation overpotential less than that of the substrate material.

Currently, the negative electrode current collector commonly used in metallic battery cells has poor affinity with lithium and sodium, and high nucleation overpotential, leading to an insufficient number of active sites for deposition of metals such as lithium and sodium. Metals such as lithium and sodium nucleate locally on the untreated surface of the negative electrode current collector, resulting in loose metal deposition. The metals such as lithium and sodium metals undergo unlimited volumetric expansion and intense side reactions, which may even lead to dendrites directly piercing the separator, posing a risk of short circuit.

In the embodiments of the present application, a modification layer is disposed between the negative electrode current collector and the separator, where the modification layer includes an active material and a substrate material, and the active material is uniformly dispersed in the substrate material. The active material in the modification layer has high affinity with metals such as lithium and sodium, which can increase the number of active sites on the surface of the negative electrode current collector, reduce the nucleation overpotential of the negative electrode current collector, enabling uniform deposition of metals on the surface of the negative electrode current collector and suppressing localized deposition of metals such as lithium and sodium on the surface of the negative electrode current collector. The substrate material in the modification layer scarcely reacts with metals such as lithium and sodium and therefore undergoes no volume change before and after metal deposition, and serves to limit volume change of the negative electrode current collector in the modification layer, which can reduce volume expansion during deposition of metals such as lithium and sodium, thereby reducing the risk of piercing the separator due to volume expansion and thus improving the reliability of the battery. In addition, the active material in the modification layer can react with metals such as lithium and sodium to form alloys, and these alloys can increase the negative electrode potential of the battery, which is beneficial to improve the quality of the solid electrolyte interphase (SEI) film on the surface of the negative electrode, thereby improving the cycle stability of the battery cell.

In some embodiments, the active material may have a lithium metal nucleation overpotential of 10 mV to 50 mV, optionally 20 mV to 35 mV.

When the lithium metal nucleation overpotential of the active material falls within this range, the active material has better affinity with metals such as lithium and sodium, thereby providing more active sites, inducing uniform metal deposition, and forming alloys with deposited metals, which reduces the nucleation overpotential of the negative electrode current collector and suppresses localized nucleation.

In some embodiments, the substrate material may have a lithium metal nucleation overpotential of 100 mV to 500 mV, optionally 150 mV to 350 mV.

When the lithium metal nucleation overpotential of the substrate material falls within this range, the substrate material has poorer affinity with metals such as lithium and sodium and scarcely reacts with metals during metal deposition, thereby further reducing volume expansion after metal deposition and improving the reliability of the battery cell.

The nucleation overpotential of the active material and substrate material can be measured as follows: In a glove box filled with argon, a metal lithium sheet is used as the counter electrode and assembled with a sheet (thickness 8 µm) of a material corresponding to the active material or substrate material into a coin cell. The electrolyte salt of the electrolyte solution is LiFSI with a concentration of 1 mol/L, and the solvent of the electrolyte solution is a mixture of dimethoxyethane (DME) and 1,1,2,2-tetrafluoroethyl-2,2,3,3-tetrafluoropropyl ether (TTE) in a weight ratio of 1:1. The separator is a PE film with a thickness of 12 µm.

At 25°C, the assembled coin cell is left to stand for 12 hours, then discharged at a constant current density of 1 mA/cm² until a capacity of 1 mAh/cm² is reached. At the start of the lithium metal deposition process, a noticeable voltage drop occurs, followed by a flat voltage plateau. The difference (here representing an absolute value) between the voltage at the lowest point of the discharge curve and the flat portion of the voltage plateau is taken as the lithium metal nucleation overpotential of the active material or substrate material.

It should be noted that the specific values of the lithium metal nucleation overpotential of the above active material or substrate material are used to indicate the physicochemical properties of the active material or substrate material, as well as the affinity degree of the active material or substrate material with deposited metals, and do not indicate that the negative electrode current collector provided in the embodiments of the present application can only be used in negative electrode-free lithium metal battery cells, the negative electrode current collector provided in the embodiments of the present application can also be used in negative electrode-free sodium metal battery cells.

In some embodiments, the substrate material includes one or more of a non-graphitized carbon material or a non-lithophilic metal.

In some embodiments, the non-graphitized carbon material includes hard carbon, amorphous carbon, or a combination thereof.

In some embodiments, the non-lithophilic metal refers to metals that scarcely react with lithium, and may include one or more of Sc, Ti, V, Cr, Mn, Fe, Co, Ni, Cu, Y, Zr, Nb, Mo, Ru, Ta, W, Pt, or Ir; optionally, the non-lithophilic metal includes one or more of Fe, Cu, or Mo.

In some embodiments, the active material includes one or more of graphitized carbon, lithophilic metals, or a compound thereof.

In some embodiments, the graphitized carbon includes one or more of graphite, graphene, or graphdiyne.

In some embodiments, the lithophilic metal includes one or more of Sn, Mg, Zn, Bi, Pb, Au, Ag, Al, Si, In, or Ga; optionally, the lithophilic metal includes one or more of Sn, Mg, Zn, or Bi.

In some embodiments, the compound of the lithophilic metal includes one or more of an oxide, a sulfide, a fluoride, a chloride, a nitride, and a carbide.

In some embodiments, based on the total weight of the modification layer, the active material has a weight content of 40% to 95%, and the substrate material has a weight content of 5% to 60%.

By adjusting the weight contents of the active material and substrate material in the modification layer within the above ranges, the synergistic effect between the substrate material and active material can be better exerted, reducing volume expansion caused by metal deposition while reducing nucleation overpotential, suppressing localized nucleation, and mitigating dendrite growth.

When the content of the active material in the modification layer is low and the content of the substrate material is high, the active material in the modification layer may provide a relatively few number of active sites, making it difficult to effectively reduce localized nucleation and mitigate dendrite growth, thereby leading to reduced cycle stability and reliability of the battery cell.

When the content of the active material in the modification layer is high and the content of the substrate material is low, the substrate material cannot effectively limit the volume expansion caused by deposition of lithium and sodium. As a result, during long-term cyclic charge and discharge of the battery, there is a risk of piercing the separator, leading to decreased reliability of the battery cell. In addition, excessive volume expansion can cause issues such as decreased porosity inside the battery and poor electrolyte solution wettability, which in turn leads to decreased cycle stability of the battery.

Therefore, by adjusting the weight contents of the active material and substrate material in the modification layer within the above ranges, the active material and substrate material can exert better synergistic effects, thereby enabling the battery cell to have both high reliability and long cycle life.

Optionally, the active material has a weight content of 55% to 70%, and the substrate material has a weight content of 30% to 45%.

Further adjustment of the weight content of the active material and substrate material in the modification layer within the above ranges can further improve the cycle stability and reliability of the battery cell.

In some embodiments, the active material has an areal density greater than or equal to 0.5 g/m².

In the embodiments of the present application, the areal density refers to the weight of the active material per unit area. The active material in the modification layer mainly serves to provide active sites, reduce nucleation overpotential, and suppress localized nucleation. By controlling the areal density of the active material in the modification layer within the above range, the active material can have higher dispersion uniformity and dispersion density in the modification layer, thereby providing more active sites, reducing nucleation overpotential, and serving to suppress localized nucleation and mitigate dendrite growth, which improves the cycle stability and reliability of the battery cell.

Optionally, the active material in the modification layer has an areal density of 0.6 g/m² to 60 g/m², further optionally 5 g/m² to 50 g/m², more optionally 10 g/m² to 25 g/m².

By limiting the areal density of the active material in the modification layer within the above ranges, more active sites can be provided, and the nucleation overpotential can be reduced, thereby further suppressing localized nucleation and mitigating dendrite growth, which in turn further improves the cycle stability and reliability of the battery cell. The areal density of the active material is related to the thickness of the modification layer and the content of the active material in the modification layer. It can be understood that when the thickness of the modification layer remains unchanged, a higher proportion of the active material results in a higher areal density of the modification layer; and when the proportion of the active material in the modification layer remains unchanged, a thicker modification layer results in a higher areal density of the modification layer.

In some embodiments, the modification layer has a thickness of 10 nm to 1000 nm.

By limiting the thickness of the modification layer within the above range, more active sites can be provided for deposited metals, nucleation overpotential can be reduced, localized nucleation can be suppressed, and volume expansion during metal deposition can be limited, thereby improving the cycle stability and reliability of the battery cell.

Optionally, the modification layer has a thickness of 100 nm to 500 nm.

By limiting the thickness of the modification layer within the above range, the nucleation overpotential can be further reduced while limiting volume expansion during metal deposition, thereby further improving the reliability and cycle stability of the battery.

In some embodiments, the modification layer can be disposed on the surface of the negative electrode current collector by magnetron sputtering, electroless plating, electroplating, or spraying.

Optionally, the modification layer can be disposed on the surface of the negative electrode current collector by magnetron sputtering. Compared to other methods, magnetron sputtering is simpler, faster, and more convenient, and the modification layer formed by magnetron sputtering has a stronger adhesion to the negative electrode current collector, resulting in better stability of the modification layer.

In some embodiments, the material of the negative electrode current collector includes one or more of copper, nickel, titanium, magnesium, aluminum, copper alloy, nickel alloy, titanium alloy, magnesium alloy, or aluminum alloy.

Optionally, the negative electrode current collector may include copper foil or nickel foil, more optionally copper foil.

### [Positive electrode plate]

In some embodiments, the positive electrode plate includes a positive electrode current collector and a positive electrode film layer disposed on at least one surface of the positive electrode current collector and including a positive electrode active material. For example, the positive electrode current collector has two surfaces opposite in its thickness direction, and the positive electrode film layer is disposed on either or both of the two opposite surfaces of the positive electrode current collector.

In some embodiments, the positive electrode active material includes materials capable of deintercalating and intercalating lithium.

In an example, the positive electrode active material may include, but is not limited to, one or more of lithium transition metal oxides, metal chalcogenides, lithium-containing phosphates, or their respective modified compounds. Examples of lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium titanium oxide, or their respective modified compounds. Lithium transition metal oxides may include, but are not limited to, laminar structures or spinel structures. Examples of lithium-containing phosphates may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and one or more modified compounds thereof.

In some embodiments, to further enhance the energy density of the battery cell, the positive electrode active material may include one or more of lithium transition metal oxides represented by the general formula LiₐNi_{b}Co_{c}M_{d}OₑD_{f} or their modified compounds, where 0.8 ≤ a ≤ 1.2, 0.5 ≤ b < 1, 0 < c < 1, 0 < d < 1, 1 ≤ e ≤ 2, 0 ≤ f ≤ 1, M may include, but is not limited to, one or more of Ge, Mo, Sn, Mn, Al, Zr, Zn, Cu, Cr, Mg, Fe, V, Ti, or B, and D may include, but is not limited to, one or more of N, F, S, or Cl.

In some embodiments, the positive electrode active material may include both lithium transition metal oxides and lithium-containing phosphates. This configuration facilitates obtaining a battery cell that offers both high capacity and high reliability.

In an example, the positive electrode active material may include, but is not limited to, one or more of LiCoO₂, LiNiO₂, LiMnO₂, LiNi_{1/2}Mn_{1/2}O₂, LiMn₂O₄, Li_{4/3}Ti_{5/3}O₄, LiNi_{1/2}Mn_{1/2}O₂, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.80}Co_{0.15}Al_{0.05}O₂, LiFePO₄, LiMnPO₄, or Li_{1.13}Ti_{0.57}Fe_{0.3}S₂.

In some embodiments, the positive electrode active material includes materials capable of deintercalating and intercalating sodium. For example, the positive electrode active material may include, but is not limited to, one or more of laminar transition metal oxides (including but not limited to P2-type or O3-type), polyanionic materials (such as phosphates, fluorophosphates, pyrophosphates, and sulfates), or Prussian-type materials.

In some embodiments, in an example, the positive electrode active material may include, but is not limited to, one or more of NaFeO₂, NaCoO₂, NaCrO₂, NaMnO₂, NaNiO₂, Na_{0.67}MO₂ (where M includes at least two of Fe, Co, Cr, Mn, Ni, V, Ti, or Mo), NaMO₂ (where M includes at least two of Fe, Co, Ni, V, Ti, or Mo), NaFePO₄, NaMnPO₄, NaCoPO₄, Na₄Fe₃(PO₄)₂O₇, Na₃V₂(PO₄)₂F₃, Na₃V₂(PO₄)₃, Prussian blue, Prussian white, or their respective modified compounds.

The modified compounds of the above positive electrode active materials may involve doping modification and/or surface coating modification of the positive electrode active materials.

In some embodiments, the positive electrode film layer may optionally further include a positive electrode conductive agent. In an example, the positive electrode conductive agent may include, but is not limited to, one or more of superconducting carbon, conductive graphite, acetylene black, carbon black, Ketjen black, carbon dots, carbon nanotubes, graphene, or carbon nanofibers.

In some embodiments, the positive electrode film layer may optionally further include a positive electrode binder. In an example, the positive electrode binder may include, but is not limited to, one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, polyethylene oxide, fluorinated acrylate resin, styrene-butadiene rubber (SBR), water-soluble unsaturated resin SR-1B, water-based acrylic resin (for example, polyacrylic acid PAA, polymethacrylic acid PMAA, sodium polyacrylate PAAS), polyacrylamide (PAM), polyvinyl alcohol (PVA), sodium alginate (SA), or carboxymethyl chitosan (CMCS).

In some embodiments, the positive electrode current collector may be a metal foil or a composite current collector. As an example of a metal foil, aluminum foil may be used. The composite current collector may include a polymer material base layer and a metallic material layer formed on at least one surface of the polymer material base layer. In an example, the metallic material may include, but is not limited to, one or more of aluminum, aluminum alloy, nickel, nickel alloy, titanium, titanium alloy, silver, or silver alloy. In an example, the polymer material base layer may include, but is not limited to, one or more of polypropylene, polyethylene terephthalate (PET), polybutylene terephthalate (PBT), polystyrene (PS), or polyethylene (PE).

The positive electrode film layer is typically formed by coating a positive electrode slurry on the positive electrode current collector, followed by drying and cold pressing. The positive electrode slurry is generally formed by dispersing the positive electrode active material, an optional positive electrode conductive agent, an optional positive electrode binder, and any other components in a solvent and stirring them until the mixture is uniform. The solvent may be N-methylpyrrolidone (NMP), but is not limited thereto.

### [Separator]

The separator is located between the positive electrode and the negative electrode, primarily to prevent internal short circuits.

The present application imposes no particular limitation on the type of separator, and any well-known porous structure separator with good chemical and mechanical stability can be used.

In some embodiments, the material of the separator may include, but is not limited to, one or more of glass fiber, non-woven fabric, polyethylene, polypropylene, or polyvinylidene fluoride. The separator may be a single-layer film or a multilayer composite film. When the separator is a multilayer composite film, the materials of each layer may be the same or different.

### [Electrolyte]

The battery cell includes an electrolyte.

In some embodiments, the electrolyte is an electrolyte solution, which includes an electrolyte salt and an organic solvent.

In some embodiments, the electrolyte solution includes anions, which may include one or more of bis(fluorosulfonyl)imide anion (FSI⁻), bis(trifluoromethanesulfonyl)imide anion (TFSI⁻), bis(oxalato)borate anion (BOB⁻), difluoro(oxalato)borate anion (DFOB⁻), difluorobis(oxalato)phosphate anion (DFOP⁻), tetrafluoro(oxalato)phosphate anion (TFOP⁻), difluorophosphate anion (PO₂F₂⁻), hexafluorophosphate anion (PF₆⁻), tetrafluoroborate anion (BF₄⁻), hexafluoroarsenate anion (AsF₆⁻), or trifluoromethanesulfonate anion (CF₃SO₃⁻).

In some embodiments, the electrolyte solution includes cations, which may include one or more of lithium ions or sodium ions.

In some embodiments, a concentration of the electrolyte salt may be 0.3 mol/L or higher, optionally 0.7 mol/L or higher. Further, the concentration of the electrolyte salt may be 4 mol/L or lower, optionally 2.5 mol/L or lower, or 1.7 mol/L or lower. The electrolyte salt having a concentration within the above range enables the electrolyte solution to have appropriate ionic conductivity.

The organic solvent may include, but is not limited to, one or more of esters, ethers, sulfones, or nitriles. Esters may include, but are not limited to, one or more of carbonates, phosphates, carboxylates, sulfates, or sulfonates. Carbonates may include cyclic carbonates and/or linear carbonates, optionally including both cyclic carbonates and linear carbonates. Linear carbonates may include low-viscosity polar linear carbonates, aliphatic branched carbonates, and the like.

In an example, the organic solvent may include, but is not limited to, one or more of ethylene carbonate (EC), propylene carbonate (PC), butylene carbonate, ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE), tetraethylene glycol dimethyl ether (TEGDME), dimethoxyethane (DME), 1,3-dioxolane (DOL), trimethyl phosphate, 3-methoxypropionitrile, H(CF₂)₂OCH₃, C₄F₉OCH₃, H(CF₂)₂OCH₂CH₃, H(CF₂)₂OCH₂CF₃, H(CF₂)₂CH₂O(CF₂)₂H, CF₃CHFCF₂OCH₃, CF₃CHFCF₂OCH₂CH₃, 2-trifluoromethyl hexafluoropropyl methyl ether, 2-trifluoromethyl hexafluoropropyl ethyl ether, 2-trifluoromethyl hexafluoropropyl propyl ether, 3-trifluoromethyl octafluorobutyl methyl ether, 3-trifluoromethyl octafluorobutyl ethyl ether, 3-trifluoromethyl octafluorobutyl propyl ether, 4-trifluoromethyl decafluoropentyl methyl ether, 4-trifluoromethyl decafluoropentyl ethyl ether, 4-trifluoromethyl decafluoropentyl propyl ether, 5-trifluoromethyl dodecafluorohexyl methyl ether, 5-trifluoromethyl dodecafluorohexyl ethyl ether, 5-trifluoromethyl dodecafluorohexyl propyl ether, 6-trifluoromethyl tetradecafluoroheptyl methyl ether, 6-trifluoromethyl tetradecafluoroheptyl ethyl ether, 6-trifluoromethyl tetradecafluoroheptyl propyl ether, 7-trifluoromethyl hexadecafluorooctyl methyl ether, 7-trifluoromethyl hexadecafluorooctyl ethyl ether, or 7-trifluoromethyl hexadecafluorooctyl propyl ether.

In some embodiments, the electrolyte solution may optionally further include additives. For example, the additives may include a negative electrode film-forming additives, a positive electrode film-forming additives, or an additive capable of improving certain properties of the battery, such as an additive for improving overcharge performance of the battery, an additive for improving high-temperature performance of the battery, or an additive for improving low-temperature power performance of the battery.

The preparation method of the battery cell is well-known. In some embodiments, the positive electrode, separator, negative electrode, and electrolyte solution can be assembled to form a battery cell. In an example, the positive electrode, separator, and negative electrode may be made into an electrode assembly through a winding process and/or a lamination process; and the electrode assembly is placed in an outer package, followed by drying, and the above electrolyte solution is injected, followed by processes such as vacuum encapsulation, standing, and formation to obtain a battery cell. Multiple battery cells can be further connected in series, parallel, or a combination thereof to form a battery module. Alternatively, multiple battery modules may further be connected in series, parallel, or a combination thereof to form a battery pack. In some embodiments, multiple battery cells may alternatively be directly assembled into a battery pack.

Embodiments of the present application further provide an electric apparatus including the battery provided in the embodiments of the present application. The battery may be used as a power source for the electric apparatus or as an energy storage unit for the electric apparatus. The electric apparatus may be, but is not limited to, a mobile device (for example, a mobile phone, a tablet computer, or a notebook computer), an electric vehicle (for example, a full electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The type of battery, such as a battery cell, battery module, or battery pack, may be selected depending on usage requirements of the electric apparatus.

FIG. 7 is a schematic diagram of an electric apparatus as an example. The electric apparatus is a pure electric vehicle, a hybrid electric vehicle, a plug-in hybrid electric vehicle, or the like. To meet the high power and high energy density requirements of the electric apparatus, a battery pack or battery module can be used.

In another example, the electric apparatus may be a mobile phone, tablet computer, laptop, or the like. Such electric apparatuses typically required to be light and thin, and a battery cell may be used as a power source.

### Examples

Examples of the present application will be described hereinafter. The examples described below are exemplary and merely used to explain the present application, and may not be understood as limitation to the present application. Where specific techniques or conditions are not specified in the examples, they are performed according to techniques or conditions described in the literature in the art or according to product specifications. Reagents or instruments used without specifying the manufacturer are all commercially available conventional products.

### Example 1

### Negative electrode current collector

A commercially available two-dimensional copper foil with a thickness of 8 µm was used.

S10: The copper foil was wiped with a 1 mol/L acetic acid solution, left to stand for 20 minutes, then wiped with anhydrous ethanol, ultrasonically cleaned in deionized water for 5 minutes, and vacuum dried at 80°C for 30 minutes.

S20: A Cu-Sn target (in which Cu and Sn were uniformly dispersed at a mass ratio of 1:1) was mounted. The copper foil was placed in a magnetron sputtering instrument, and the chamber was evacuated (vacuum degree <1 Pa).

S30: Argon gas was introduced into the magnetron sputtering instrument chamber to 1 bar, then the chamber was evacuated again (vacuum degree <1 Pa).

S40: The magnetron sputtering current was set to 30 mA, and the magnetron sputtering was performed for 438 s to form a modification layer with a thickness of 200 nm on the copper foil.

### Positive electrode plate

Lithium iron phosphate, conductive agent carbon black (Super P), and binder polyvinylidene fluoride (PVDF) were mixed uniformly in a weight ratio of 8:1:1 in an appropriate amount of solvent N-methylpyrrolidone (NMP) to obtain a positive electrode slurry. The positive electrode slurry was coated on a positive electrode current collector aluminum foil and dried to obtain a positive electrode plate.

### Separator

### A PE film with a thickness of 12 µm was used as the separator.

### Examples 2 to 14

The preparation process was the same as in Example 1, with differences detailed in Table 1.

### Comparative Example 1

A commercially available two-dimensional copper foil with a thickness of 8 µm was used as the negative electrode current collector.

### Comparative Examples 2 to 3

The preparation process was the same as in Example 1, with differences detailed in Table 1.

### Comparative Example 4

A commercially available two-dimensional copper foil with a thickness of 8 µm was used.

S10: The copper foil was wiped with a 1 mol/L acetic acid solution, left to stand for 20 minutes, then wiped with anhydrous ethanol, ultrasonically cleaned in deionized water for 5 minutes, and vacuum dried at 80°C for 30 minutes.

S20: After a Cu target was mounted, the copper foil was placed in a magnetron sputtering instrument, and the chamber was evacuated (vacuum degree <1 Pa).

S30: Argon gas was introduced into the magnetron sputtering instrument chamber to 1 bar, then the chamber was evacuated again (vacuum degree <1 Pa).

S40: The magnetron sputtering current was set to 30 mA, and the magnetron sputtering was performed for 119 s.

S50: The target was replaced with an Sn target. The chamber was evacuated (vacuum degree <1 Pa). After argon gas was introduced into the chamber to 1 bar, the chamber was evacuated again (vacuum degree <1 Pa).

S60: The magnetron sputtering current was set to 30 mA, and the magnetron sputtering was performed for 438 s.

### Testing section

In a glove box filled with argon, the positive electrode plate, negative electrode current collector, and separator were assembled into a coin cell. The electrolyte salt of the electrolyte solution was LiFSI with a concentration of 1 mol/L, and the solvent of the electrolyte solution was dimethoxyethane (DME).

### (1) Thickness expansion rate of negative electrode current collector after lithium deposition

Before charging of the coin cell, the total thickness of the modification layer was recorded as H0. At 25°C, the assembled coin cell was left to stand for 12 hours, then charged at a constant current of 0.1C to 3.65 V, followed by constant voltage charging at 3.65 V to 0.05C. The coin cell was disassembled, and the total thickness of the modification layer was measured and recorded as H1. H1/H0 was used to indicate the thickness expansion rate of the negative electrode current collector after lithium deposition. The number of coin cell samples may be 6 or more, and the average value of the test results was taken.

### (2) Cycle stability

At 25°C, the assembled coin cell was left to stand for 12 hours, then charged at a constant current of 0.2C to 3.65 V, followed by constant voltage charging at 3.65 V to 0.05C. The coin cell was left to stand for 10 minutes, then discharged at a constant current of 0.5C to 2 V. The coin cell was cycled according to the above method until the discharge capacity decayed to 50% of the first-cycle discharge capacity, and the number of cycles was recorded. During testing, the number of coin cell samples may be 6 or more, and the average value of the test results was taken.

### (3) First-cycle coulombic efficiency

At 25°C, the assembled coin cell was left to stand for 12 hours, then charged at a constant current of 0.1C to 3.65 V, followed by constant voltage charging at 3.65 V to 0.05C, to obtain a charge capacity. The coin cell was left to stand for 10 minutes, then discharged at a constant current of 0.2C to 2 V, to obtain a discharge capacity. The first-cycle coulombic efficiency of coin cell was calculated as follows: First-cycle coulombic efficiency = (discharge capacity/charge capacity) × 100%. During testing, the number of coin cell samples may be 6 or more, and the average value of the test results was taken.

The test results are detailed in Table 1.

**Table 1**

| | Active material | Weight content of active material in modification layer | Substrate material | Weight content of substrate material in modification layer | Thickness of modification layer (nm) | Magnetron sputtering parameters (current / time) | Areal density of active material (g/m²) | Thickness expansion rate | Number of cycles (cycles) | First-cycle coulombic efficiency |
|---|---|---|---|---|---|---|---|---|---|---|
| Example 1 | Sn | 50% | Cu | 50% | 200 | 437 s | 10.68 | 233% | 150 | 95% |
| Example 2 | Sn | 70% | Cu | 30% | 200 | 30 mA/420 s | 14.89 | 246% | 166 | 95% |
| Example 3 | Sn | 90% | Cu | 10% | 200 | 30 mA/403 s | 16.65 | 273% | 170 | 94% |
| Example 4 | Sn | 95% | Cu | 5% | 200 | 30 mA/400 s | 17.12 | 290% | 172 | 94% |
| Example 5 | Sn | 40% | Cu | 60% | 200 | 30 mA/447 s | 8.97 | 237% | 139 | 95% |
| Example 6 | Sn | 70% | Cu | 30% | 10 | 30 mA/210 s | 0.52 | 289% | 153 | 97% |
| Example 7 | Sn | 70% | Cu | 30% | 500 | 30 mA/1052 s | 26.14 | 247% | 176 | 92% |
| Example 8 | Sn | 70% | Cu | 30% | 1000 | 30 mA/2105 s | 53.09 | 221% | 194 | 90% |
| Example 9 | Sn | 70% | Cu | 30% | 1200 | 30 mA/2525 s | 59.81 | 227% | 192 | 85% |
| Example 10 | Zn | 70% | Cu | 30% | 200 | 30 mA/414 s | 15.11 | 229% | 185 | 93% |
| Example 11 | Mg | 70% | Cu | 30% | 200 | 30 mA/210 s | 14.95 | 236% | 173 | 91% |
| Example 12 | Bi | 70% | Cu | 30% | 200 | 30 mA/496 s | 16.28 | 214% | 186 | 91% |
| Example 13 | Graphite | 70% | Cu | 30% | 200 | 30 mA/230 s | 14.52 | 231% | 156 | 93% |
| Example 14 | Sn | 70% | Fe | 30% | 200 | 30 mA/404 s | 15.63 | 230% | 154 | 94% |
| Example 15 | Sn | 70% | Mo | 30% | 200 | 30 mA/442 s | 15.44 | 237% | 132 | 93% |
| Example 16 | Sn | 70% | Hard carbon | 30% | 200 | 30 mA/313 s | 14.21 | 215% | 159 | 93% |
| Comparative Example 1 | / | / | / | / | / | / | / | 102% | 66 | 98% |
| Comparative Example 2 | Sn | 100% | / | / | 200 | 30 mA/396 s | 19.86 | 293% | 169 | 94% |
| Comparative Example 3 | / | / | Cu | 100% | 200 | 30 mA/481 s | / | 103% | 67 | 98% |
| Comparative Example 4 | Sn | / | Cu | / | 200 | 30 mA/(Cu 336 s + Sn 119 s) | / | 255% | 120 | 95% |

From Examples 1 to 5 and Comparative Examples 1 to 3, it can be seen that the modification layer formed using the active material and the substrate material as raw materials can better achieve the purpose of improving the overall performance of the battery. Increasing the amount of the active material in the modification layer within a certain range improves cycling performance, but also leads to a significant increase in the volume expansion of the current collector.

From the comparison of Example 1 and Comparative Example 4, it can be seen that the modification layer formed by sputtering a uniform mixture of the active material and the substrate material exhibits better performance than the modification layer obtained by sequential sputtering of the substrate material and the active material. This may be because in the modification layer formed by sputtering after uniform mixing, the adhesion between the active material and the substrate material is higher, resulting in better bonding stability of the modification layer on the current collector during battery charge and discharge, a lower risk of delamination of the modification layer, and improved cycling performance.

From the data of Examples 6 to 9, it can be seen that increasing the thickness of the modification layer can reduce the volume expansion of the negative electrode current collector, but an excessively thick modification layer may lead to a decrease in the first-cycle coulombic efficiency of the battery.

Although the present application has been described with reference to preferred embodiments, various modifications can be made and equivalents may be substituted for elements thereof without departing from the scope of the present application. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. An electrode assembly, comprising a positive electrode plate, a negative electrode current collector, and a separator located between the positive electrode plate and the negative electrode current collector, and
the electrode assembly further comprises a modification layer located between the negative electrode current collector and the separator, the modification layer comprising a substrate material and an active material dispersed in the substrate material; wherein
the substrate material has a lithium metal nucleation overpotential greater than or equal to 80 mV, and the active material has a lithium metal nucleation overpotential less than that of the substrate material.

2. The electrode assembly according to claim 1, wherein the substrate material has a lithium metal nucleation overpotential of 100 mV to 500 mV; and/or the active material has a lithium metal nucleation overpotential of 10 mV to 50 mV.

3. The electrode assembly according to claim 1 or 2, wherein the substrate material comprises one or more of a non-graphitized carbon material or a non-lithophilic metal.

4. The electrode assembly according to claim 3, wherein the non-graphitized carbon material comprises hard carbon, amorphous carbon, or a combination thereof; and/or
the non-lithophilic metal comprises one or more of Sc, Ti, V, Cr, Mn, Fe, Co, Ni, Cu, Y, Zr, Nb, Mo, Ru, Ta, W, Pt, or Ir.

5. The electrode assembly according to any one of claims 1 to 4, wherein the active material comprises one or more of graphitized carbon, lithophilic metals, or a compound thereof.

6. The electrode assembly according to claim 5, wherein the graphitized carbon comprises one or more of graphite, graphene, or graphdiyne; and/or
the lithophilic metal comprises one or more of Sn, Mg, Zn, Bi, Pb, Au, Ag, Al, Si, In, or Ga; and/or
the compound of the lithophilic metal comprises one or more of an oxide, a sulfide, a fluoride, a chloride, a nitride, and a carbide.

7. The electrode assembly according to any one of claims 1 to 6, wherein based on a total weight of the modification layer, the active material has a weight content of 50% to 95%, and the substrate material has a weight content of 5% to 50%.

8. The electrode assembly according to any one of claims 1 to 7, wherein based on the total weight of the modification layer, the active material has a weight content of 55% to 70%, and the substrate material has a weight content of 30% to 45%.

9. The electrode assembly according to any one of claims 1 to 8, wherein the active material has an areal density greater than or equal to 0.5 g/m².

10. The electrode assembly according to any one of claims 1 to 9, wherein the modification layer has a thickness of 10 nm to 1000 nm.

11. The electrode assembly according to any one of claims 1 to 10, wherein the modification layer has a thickness of 100 nm to 500 nm.

12. The electrode assembly according to any one of claims 1 to 11, wherein the material of the negative electrode current collector comprises one or more of copper, nickel, titanium, magnesium, aluminum, copper alloy, nickel alloy, titanium alloy, magnesium alloy, or aluminum alloy.

13. A battery cell comprising the electrode assembly according to any one of claims 1 to 12.

14. The battery cell according to claim 13, wherein the battery cell comprises at least one of a negative electrode-free lithium metal battery cell and a negative electrode-free sodium metal battery cell.

15. A secondary battery comprising the battery cell according to claim 13 or 14.

16. An electric apparatus comprising the secondary battery according to claim 15.
